# NEUE EUROPÄISCHE PATENTSCHRIFT

(11) **EP 2 902 582 B2**
(45) Veröffentlichungstag und Bekanntmachung des Hinweises auf die Entscheidung über den Einspruch: **28.12.2022**
(45) Hinweis auf die Patenterteilung: 06.04.2016
(21) Anmeldenummer: 14153090.7
(22) Anmeldetag: 29.01.2014
(51) Int. Cl.: E21B 7/02, E02F 9/22, E02F 3/36, B60D 1/64, F16L 39/00, B60D 1/62

(54) **Mastanordnung und Verfahren zum Verbinden einer Werkzeugeinheit mit einem Mastschlitten einer Mastanordnung**
Mast assembly and method for connecting a tool unit to the mast carriage of a mast assembly
Système de mât et procédé de fixation d'un outil de travail au rail de coulissage du mât

(43) Veröffentlichungstag der Anmeldung: 05.08.2015
(73) Patentinhaber: BAUER Maschinen GmbH, 86529 Schrobenhausen (DE)
(72) Erfinder: Otto, Hans-Philipp, 86551 Aichach (DE); Kraus, Wolfgang, 86529 Schrobenhausen (DE)
(74) Vertreter: Wunderlich & Heim Patentanwälte Partnerschaftsgesellschaft mbB

(56) Entgegenhaltungen:
- EP-A1- 2 540 954
- EP-A2- 1 193 349
- EP-A2- 1 983 149
- DE-A1- 3 303 262
- DE-A1- 3 721 526
- DE-A1- 4 222 193
- DE-A1- 4 312 368
- DE-A1-102004 037 459
- DE-U1- 29 810 118
- US-A1- 2013 062 126

## Beschreibung

Die Erfindung betrifft eine Mastanordnung für eine Baumaschine, mit einem Mast, welcher eine Mastführung aufweist, entlang welcher ein Mastschlitten verfahrbar gelagert ist, welcher mit einer Hydraulikquelle verbunden ist und ein erstes Hydraulikkupplungsteil für ein hydraulisches Verbinden einer Werkzeugeinheit mit der Hydraulikquelle an dem Mastschlitten aufweist, gemäß dem Oberbegriff des Anspruchs 1. Die Erfindung betrifft weiterhin ein Verfahren zum Verbinden einer Werkzeugeinheit mit einem Mastschlitten einer Mastanordnung.

Eine gattungsgemäße Mastanordnung und ein gattungsgemäßes Verfahren gehen beispielsweise aus der EP 1 983 149 A2 hervor. An einem Mastschlitten wird dabei ein sogenannter Arbeitsgeräteschlitten mittels Verbindungsbolzen aufgehängt. Durch ein nach oben Fahren des Vorschubschlittens sitzt der Arbeitsgeräteschlitten unmittelbar auf einer Anlageplatte am Vorschubschlitten auf. In dieser aufgesetzten Position kann dann der Arbeitsgeräteschlitten mit dem Mastschlitten durch zusätzliche Verriegelungsbolzen von Hand befestigt werden. Zudem ist eine hydraulische Verbindung ebenfalls von Hand herzustellen.

Ein weiterer sogenannter Mäkler mit einem Mäklerschlitten und einer Werkzeugeinheit gehen aus der DE 33 03 262 A1 hervor. Über eine lösbare Verbindung zwischen Mäklerschlitten und Werkzeugeinheit ist nichts ausgesagt.

Aus der DE 10 2004 037 459 A1 ist eine hydraulische Schnellkupplung an zwei Mastteilen bekannt, welche durch eine Verschiebebewegung miteinander verbindbar sind. Dabei wird ein erstes federnd gelagertes Hydraulikkupplungsteil von Führungsbolzen abgezogen und gleichzeitig auf Zentrierbolzen des gegenüberliegenden Kupplungsteiles aufgeschoben.

Der Erfindung liegt die Aufgabe zugrunde, eine Mastanordnung und ein Verfahren zum Verbinden einer Werkzeugeinheit mit einem Mastschlitten einer Mastanordnung anzugeben, mit welchen ein zuverlässiges und effizientes Verbinden von Mastschlitten und einer Werkzeugeinheit ermöglicht werden.

Die Aufgabe wird zum einen durch eine Mastanordnung mit den Merkmalen des Anspruchs 1 und zum anderen durch ein Verfahren mit den Merkmalen des Anspruchs 12 gelöst. Bevorzugte Ausgestaltungen der Erfindung sind in den abhängigen Ansprüchen angegeben.

Die erfindungsgemäße Mastanordnung ist dadurch gekennzeichnet, dass die Werkzeugeinheit eine Werkzeugführungseinrichtung aufweist, mit welcher die Werkzeugeinheit an der Mastführung anbringbar und positionierbar ist, dass an einem Rahmen der Werkzeugeinheit ein zweites Hydraulikkupplungsteil angeordnet ist, welches mit dem ersten Hydraulikkupplungsteil des Mastschlittens korrespondiert, dass bei einem Zusammenfahren von Mastschlitten und Werkzeugeinheit entlang der Mastführung das erste Hydraulikkupplungsteil des Mastschlittens mit dem zweiten Hydraulikkupplungsteil an der Werkzeugeinheit hydraulisch zusammenschließbar ist, und dass eine Verriegelungseinrichtung vorgesehen ist, welche von den Hydraulikkupplungsteilen beabstandet ist und mindestens einen hydraulisch betätigbaren Riegelbolzen aufweist, mit welchem der Rahmen der Werkzeugeinheit mit dem Mastschlitten mechanisch verbindbar ist.

Bei dem erfindungsgemäßen Verfahren zum Verbinden einer Werkzeugeinheit mit einem Mastschlitten der Mastanordnung ist vorgesehen, dass die Werkzeugeinheit eine Werkzeugführungseinrichtung aufweist, mit welcher die Werkzeugeinheit an einer Mastführung eines Mastes der Mastanordnung eines Baugerätes angebracht und positioniert wird, der Mastschlitten entlang der Mastführung des Mastes auf die angebrachte Werkzeugeinheit zu verfahren wird, wobei ein erstes Hydraulikkupplungsteil an dem Mastschlitten mit einem korrespondierenden zweiten Hydraulikkupplungsteil an der Werkzeugeinheit gekuppelt wird und eine Hydraulikquelle an dem Mastschlitten an der Werkzeugeinheit hydraulisch angeschlossen wird, und anschließend mindestens ein Riegelbolzen einer Verriegelungseinrichtung hydraulisch betätigt wird, wobei der Mastschlitten beabstandet von den Hydraulikkupplungsteilen mit dem Rahmen der Werkzeugeinheit mechanisch verbunden wird.

Eine Grundidee der Erfindung besteht darin, die Werkzeugeinheit mit einer Werkzeugführungseinrichtung zu versehen, damit die Werkzeugeinheit unmittelbar an der Mastführung geführt werden kann. Nachdem die Werkzeugeinheit an der Mastführung angebracht und positioniert ist, kann ein Kuppeln des Mastschlittens mit der Werkzeugeinheit weitgehend automatisch erfolgen. Bei einem Zusammenfahren oder Zusammenschieben von Mastschlitten und Werkzeugeinheit, indem der Mastschlitten durch den Schlittenantrieb, insbesondere eine Seilwinde oder ein Hydraulikzylinder, verfahren wird, kann zunächst eine Verbindung zwischen den zwei Hydraulikkupplungsteilen erfolgen. Hierdurch können die empfindlichen Hydraulikkupplungsteile, welche vorzugsweise eine gewisse federnde Lagerung aufweisen, problemlos gekuppelt werden. Anschließend oder gleichzeitig kann die mechanische Verriegelung zwischen dem Mastschlitten und der Werkzeugeinheit über eine Verriegelungseinrichtung erfolgen, welche von der Hydraulickupplung beabstandet ist. Die mechanische Verriegelung kann unmittelbar am Rahmen der Werkzeugeinheit mit dem Mastschlitten erfolgen.

Auf diese Weise ist eine weitgehend automatische Verbindung von Werkzeugeinheit und Mastschlitten ermöglicht. Dies erlaubt ein schnelles und effizientes Wechseln der Werkzeugeinheit ohne zeitaufwändigen Einsatz von Bedienpersonal. Durch eine einzige Bewegung des Mastschlittens oder der Werkzeugeinheit kann die hydraulische und die mechanische Verbindung der beiden Bauteile hergestellt werden.

Eine bevorzugte Ausführungsform der Erfindung besteht darin, dass das erste Hydraulikkupplungsteil und das zweite Hydraulikkupplungsteil mehrere Kupplungsstecker beziehungsweise Kupplungsmuffen aufweisen. Grundsätzlich können an einem Hydraulickupplungsteil nur Kupplungsstecker und an dem gegenüberliegenden Hydraulikkupplungsteil nur die korrespondierenden Kupplungsmuffen vorgesehen sein. Kupplungsstecker und Kupplungsmuffen sind dabei jeweils so ausgebildet, dass diese eine passende hydraulische Verbindung im zusammengeschobenen Zustand bilden. Neben Steckern und Muffen für hydraulische Verbindungen können auch Verbindungselemente für Elektro- und Datenleitungen im Bereich der Kupplung vorgesehen sein, welche entsprechend verbunden werden. Die Hydraulikquelle kann insbesondere ein Hydraulikaggregat sein, welches an einem Trägergerät oder separat davon angeordnet ist. Über entsprechende Leitungen ist die Hydraulikquelle mit dem ersten Hydraulikkupplungsteil am Mastschlitten leitungsverbunden.

Ein besonders problemloses Zusammenstecken der einzelnen Kupplungselemente ergibt sich nach einer Weiterbildung der Erfindung dadurch, dass die Kupplungsstecker und/oder die Kupplungsmuffen federnd an dem Mastschlitten oder der Werkzeugeinheit gelagert sind. Die federnde Lagerung kann dabei nur an einem Hydraulikkupplungsteil oder vorzugsweise an beiden Kupplungsteilen vorgesehen sein. Dabei können die Kupplungsstecker beziehungsweise die Kupplungsmuffen einzeln gelagert sein oder die Kupplungsstecker und Kupplungsmuffen können insgesamt in einem Kupplungsblock fest angeordnet sein, welcher selbst federnd gelagert ist. Die federnde Lagerung kann über metallische Federn oder über elastische Gummielemente erfolgen.

Es ist erfindungsgemäß, dass das erste Hydraulikkupplungsteil und das zweite Hydraulikkupplungsteil beabstandet zu der Mastführung angeordnet sind, wobei an der Werkzeugeinheit oder dem Mastschlitten zwischen den Hydraulikkupplungsteilen und der Mastführung ein Aufnahmeraum gebildet ist, in welchem die Verriegelungseinrichtung angeordnet ist. Dies hat den Vorteil, dass eine mechanische Verriegelung von Mastschlitten und Werkzeugeinheit nahe an der Mastführung erfolgen kann. Dies sichert eine besonders stabile Verbindung. Gleichzeitig sind die beiden Kupplungsteile weiter von der Mastführung beabstandet, wodurch ein leichteres und zuverlässigeres Zusammenstecken gewährleistet ist.

Der Riegelbolzen kann in verschiedener Weise ausgebildet und gelagert sein. Neben zylindrischen Bolzen sind auch bogenförmige, schwenkbare Riegelbolzen einsetzbar. Für eine besonders stabile Verbindung ist es nach einer Weiterbildung der Erfindung zweckmäßig, dass der mindestens eine Riegelbolzen quer zu einer Längsachse des Mastes gerichtet ist. Damit erfolgt die Verriegelung auch quer zur Bewegungsrichtung der beiden Schlittenelemente. Vorzugsweise sind zwei entgegengesetzt gegenüberliegende Riegelbolzen vorgesehen, so dass eine beidseitige formschlüssige Verriegelung am Mastschlitten erfolgen kann.

Weiterhin ist es nach einer Ausgestaltung der Erfindung bevorzugt, dass der mindestens eine Riegelbolzen durch einen zugeordneten Hydraulikzylinder angetrieben ist. Dabei kann je Riegelbolzen ein Hydraulikzylinder vorgesehen sein. Vorzugsweise wird der Riegel unmittelbar in Betätigungsrichtung des Hydraulikzylinders verschoben. Gemäß einer Abwandlung kann vorgesehen sein, dass ein Hydraulikzylinder zwei oder mehrere Riegelbolzen verstellt. Zwischen Hydraulikzylinder und dem einzelnen oder den mehreren Riegelbolzen kann ein Übertragungsmechanismus, etwa ein Keilschiebermechanismus, vorgesehen sein.

Die erfindungsgemäße Mastanordnung erlaubt mehrere Anordnungsvarianten der Verriegelungseinrichtung am Mastschlitten oder an der Werkzeugeinheit. Bei einem vorauseilenden Kuppeln der Hydraulikkupplung kann die Verriegelungseinrichtung insgesamt an der Werkzeugeinheit vorgesehen sein. Nach der hydraulischen Verbindung könnte so ein Hydraulikzylinder an der Werkzeugeinheit zur Verriegelung betätigt werden.

Eine besonders zweckmäßige Ausgestaltung ist nach einer Weiterbildung der Erfindung dadurch vorgesehen, dass der mindestens eine Riegelbolzen an dem Mastschlitten angeordnet ist und dass im verbundenen Zustand von Mastschlitten und Werkzeugeinheit der mindestens eine Riegelbolzen in dem Aufnahmeraum an der Werkzeugeinheit angeordnet ist. Der Riegelbolzen ist bei dieser Anordnung an einem Mastschlitten jederzeit betätigbar, da er stets mit der Hydraulikquelle am Mastschlitten verbunden ist.

Weiterhin wird nach einer anderen Ausgestaltung der Erfindung eine besonders stabile Verriegelung dadurch erreicht, dass der Riegelbolzen in eine Riegelöffnung an dem Rahmen der Werkzeugeinheit einfahrbar ist. Es erfolgt also eine mechanische Verbindung unmittelbar am Rahmen, wodurch die Hydraulikkupplungsteile von mechanischen Beanspruchungen entlastet werden.

Eine weitere Verbesserung beim Herstellen der hydraulischen Verbindung wird vorzugsweise nach der Erfindung dadurch erreicht, dass an der Werkzeugeinheit und/oder dem Mastschlitten mindestens ein Zentrierbolzen vorgesehen ist, welcher beim Zusammenfahren von Werkzeugeinheit und Mastschlitten noch vor einem hydraulischen Zusammenschluss mit einer Zentrierbohrung in den gegenüberliegenden Mastschlitten beziehungsweise der gegenüberliegenden Werkzeugeinheit in Eingriff kommt. Der Zentrierbolzen ist dabei am Rahmen von Mastschlitten oder Werkzeugeinheit oder vorzugsweise unmittelbar an einem der blockartigen Hydraulikkupplungsteile angeordnet. Vorzugsweise sind zwei oder mehr Zentrierbolzen vorgesehen. Der Zentrierbolzen weist an seinem freien Ende eine Verjüngung auf, um das Zusammenschieben zu erleichtern.

Eine weitere bevorzugte Ausführungsform der Erfindung besteht darin, dass mindestens ein Hydraulickupplungsteil eine verstellbare Abdeckung aufweist, welche bei einem Zusammenfahren der Hydraulikkupplungsteile von einer Abdeckposition in eine Freigabeposition verstellbar ist. Vorzugsweise ist an beiden Hydraulikkupplungsteilen jeweils eine Abdeckung angeordnet. Die Abdeckung kann ein verstellbares Plattenelement sein, welches beispielsweise durch eine Feder in der Abdeckposition gehalten ist. In der Abdeckposition sind die Kupplungsstecker oder Kupplungsmuffen durch die Abdeckung vor äußeren Einflüssen, insbesondere vor Verschmutzung, geschützt. Bei einem Zusammenfahren von Mastschlitten und Werkzeugeinheit kann über eine Betätigungsnocke das Abdeckelement entgegen der Federspannung aus der Abdeckposition in eine Freigabeposition bewegt werden, in welcher die Kupplungsstecker beziehungsweise Kupplungsmuffen der Hydraulickupplungsteile frei liegen. Bei einem weiteren Zusammenfahren können so Kupplungsstecker und Kupplungsmuffen miteinander verbunden werden. Bei einem Auseinanderfahren wird dann das Abdeckelement durch die Federspannung wieder zurück in die Abdeckposition bewegt.

Grundsätzlich kann die Werkzeugeinheit ein beliebiges Arbeitsgerät aufweisen. Bevorzugte Ausführungsformen der Erfindung bestehen darin, dass die Werkzeugeinheit einen Rüttler, einen Bohrantrieb oder einen Hydraulikhammer aufweist.

Schließlich ist es nach der Erfindung vorgesehen, dass die vorausgehend beschriebene Mastanordnung Einsatz an einer Baumaschine findet, welche ein Trägergerät mit einer Mastanordnung und einem im Wesentlichen vertikalen Mast aufweist.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine schematisch und ausschnittsweise dargestellte erfindungsgemäße Mastanordnung mit einem Mastschlitten und einer Werkzeugeinheit vordem Kuppeln;
- Fig. 2: die Mastanordnung gemäß Fig. 2 in einem Zustand beim Kuppeln;
- Fig. 3: die Mastanordnung der Figuren 1 und 2 nach Abschluss des Kuppelns;
- Fig. 4: eine vergrößerte Teilquerschnittsansicht der Hydraulikkupplungsteile der erfindungsgemäßen Mastanordnung von Fig. 1 unmittelbar vor einem Kuppeln;
- Fig. 5: die Anordnung der Hydraulikkupplungsteile von Fig. 4 in einem Zustand während des Kuppelns; und
- Fig. 6: die Anordnung der Hydraulikkupplungsteile nach Abschluss des Kuppelns.

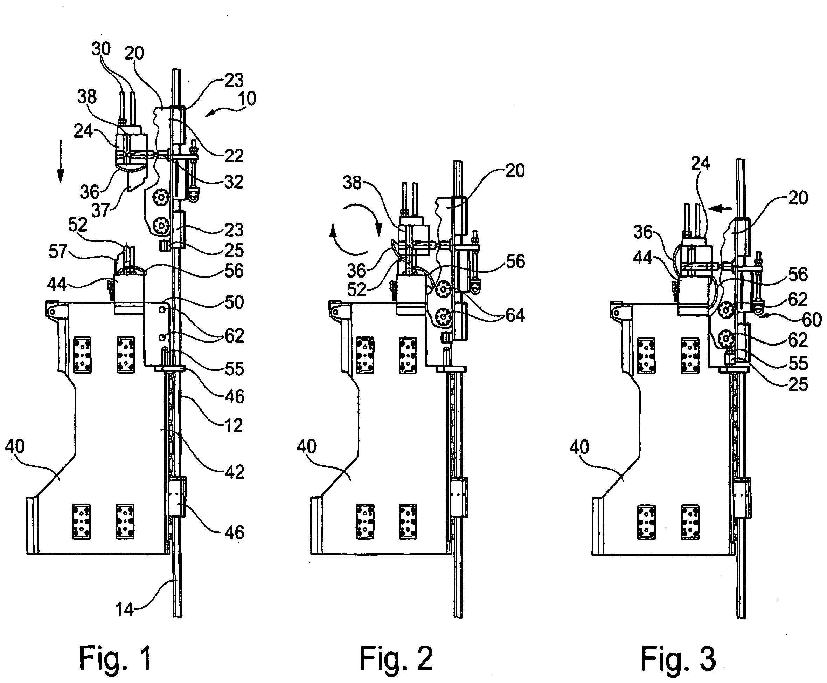

Eine erfindungsgemäße Mastanordnung 10 ist teilweise und schematisiert in den Figuren 1 bis 3 dargestellt. Von dem nur angedeuteten vertikalen Mast 12, welcher beispielsweise ein Mäkler sein kann, ist im Wesentlichen eine leistenförmige Mastführung 14 dargestellt. Entlang der Mastführung 14 ist an dem Mast 12 ein Mastschlitten 20 verschiebbar gelagert. Die Verschiebung kann mittels einer nicht dargestellten Seilwinde oder eines hydraulischen Stellzylinders erfolgen. Der Mast 12 ist an einem nicht dargestellten Trägergerät einer Baumaschine, insbesondere für den Spezialtiefbau, in einer im Wesentlichen vertikalen Ausrichtung angebracht.

Im dargestellten Ausführungsbeispiel ist als Werkzeugeinheit 40 ein Rüttler oder Schwingungserreger vorgesehen, welcher zum Einrütteln oder Einrammen von Spundwandbohlen oder Metallpfählen in den Boden dient. Für eine Umrüstung einer Baumaschine auf einen derartigen Rüttlerbetrieb wird die Werkzeugeinheit 40 an der Mastführung 14 des Mastes 12 angebracht. Die Werkzeugeinheit 40 weist einen metallischen Rahmen 42 auf, welcher an seiner zum Mast 12 gerichteten Seite eine Werkzeugführungseinrichtung 46 aufweist. Die Werkzeugführungseinrichtung 46 ist mit klammerartigen Gleitschuhen ausgebildet, welche in bekannter Weise die leistenförmige Mastführung 14 umgreifen.

Nach einem Anbringen der Werkzeugeinheit 40 an der Mastführung 14 wird der Mastschlitten 20 entlang der Mastführung 14 nach unten auf die Werkzeugeinheit 40 zu verfahren. Der Mastschlitten 20 weist dabei ebenfalls einen Schlittenrahmen 22 auf, an dessen Führungsseite Schlittenführungselemente 23 angeordnet sind. Die Schlittenführungselemente 23 können entsprechend der Werkzeugführungseinrichtung 46 der Werkzeugeinheit 40 als klammerartige Gleitschuhe ausgebildet sein.

Für ein hydraulisches Verbinden von Mastschlitten 20 und Werkzeugeinheit 40 ist an dem Mastschlitten 20 ein erstes blockartiges Hydraulikkupplungsteil 24 angeordnet, welches über Hydraulikleitungen 30 an einer Hydraulikquelle angeschlossen ist. Die Hydraulikquelle ist üblicherweise ein Hydraulikaggregat, welches am Trägergerät der Baumaschine angeordnet sein kann. Korrespondierend zu diesem ersten Hydraulickupplungsteil 24 an dem Mastschlitten 20 ist an der Werkzeugeinheit 40 ein blockartiges zweites Hydraulikkupplungsteil 44 angeordnet. Das erste Hydraulikkupplungsteil 24 weist zum Schutz der Verbindungselemente eine erste Abdeckung 36 auf, welche als eine bogenförmige Platte ausgebildet ist. Eine entsprechende zweite Abdeckung 56 ist auch am zweiten Hydraulikkupplungsteil 44 der Werkzeugeinheit 40 vorgesehen.

In der Darstellung gemäß Fig. 1 sind die erste Abdeckung 36 und die zweite Abdeckung 56 jeweils in ihrer Abdeckposition dargestellt, in welcher die Abdeckungen 36, 56 die jeweiligen Verbindungselemente an den beiden Hydraulikkupplungsteilen 24, 44 schützen.

Bei einem weiteren Zusammenschieben von Mastschlitten und Werkzeugeinheit 40, wie es in Fig. 2 dargestellt ist, gelangt eine erste Betätigungsnocke 37 an dem ersten Hydraulikkupplungsteil 24 so in Wirkverbindung mit dem gegenüberliegenden zweiten Hydraulikkupplungsteil 44, dass hierdurch die zweite Abdeckung 56 an dem zweiten Hydraulikkupplungsteil 44 von der Abdeckposition gemäß Fig. 1 in eine Freigabeposition gedrückt wird, in welcher die Anschlüsse des zweiten Hydraulikkupplungsteiles 44 freiliegen. In entsprechender Weise betätigt auch ein zweiter Betätigungsnocken 57 an dem zweiten Hydraulikkupplungsteil 44 der Werkzeugeinheit 40 die erste Abdeckung 36 an dem ersten Hydraulikkupplungsteil 24. Somit wird auch die erste Abdeckung 36 von der Abdeckposition gemäß Fig. 1 in eine Freigabeposition verschwenkt, wie es durch die Pfeile in Fig. 2 angedeutet ist.

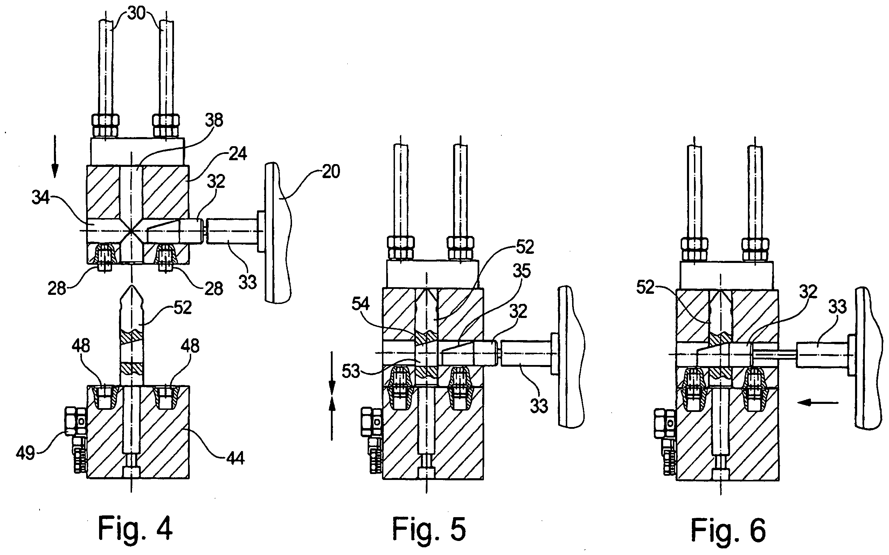

Die jeweilige Freigabeposition der ersten Abdeckung 36 und der zweiten Abdeckung 56, bei welcher diese in einem Seitenbereich zu dem jeweiligen Hydraulikkupplungsteil 24, 44 angeordnet sind, ist in Fig. 3 dargestellt. Bei dieser Kupplungsbewegung gelangt auch ein am zweiten Hydraulikkupplungsteil 44 vorstehender Zentrierbolzen 52 in Eingriff mit einer Zentrierbohrung 38 am ersten Hydraulikkupplungsteil 24. Zusätzlich kann eine Verriegelung der beiden Hydraulikkupplungsteile 24, 44 mittels eines quer gerichteten Verriegelungselementes 32 erfolgen, welches nachfolgend noch näher im Zusammenhang mit den Figuren 4 bis 6 erläutert wird.

Neben der hydraulischen Verbindung von Mastschlitten 20 und Werkzeugeinheit 40 erfolgt auch eine mechanische Verbindung zwischen den beiden Komponenten. Hierzu ist an der Werkzeugeinheit 40 eine Verriegelungseinrichtung 60 vorgesehen, von welcher lediglich zwei Riegelbolzen 62 in Draufsicht dargestellt sind. Die beiden Hydraulikkupplungsteile 24, 44 sind von der Mastführung 14 beabstandet, wobei ein Aufnahmeraum 50 für ein überdeckendes Zusammenschieben von Mastschlitten 20 und Werkzeugeinheit 40 gebildet ist. Die Riegelbolzen 62 werden über einen nicht dargestellten Hydraulikzylinder am Rahmen 42 der Werkzeugeinheit 40 betätigt. In der zusammengeschobenen Endposition gemäß Fig. 3 können die Riegelbolzen 62 quer zur Mastlängsrichtung aus dem Rahmen 42 heraus und in zwei korrespondierende Riegelöffnungen 64 an dem Schlittenrahmen 22 des Mastschlittens 20 eingefahren werden. Dabei ist darauf hinzuweisen, dass die Verriegelungseinrichtung 60 symmetrisch ausgebildet ist, so dass auf der gegenüberliegenden Seite zwei weitere Riegelbolzen 62 entsprechend in zwei weitere Riegelöffnungen 64 des Mastschlittens eingefahren werden können.

Für eine weitere stabile mechanische Verbindung ist an der Werkzeugeinheit 40 ein Aufnahmebolzen 55 vorgesehen, auf welchen beim Zusammenschieben eine Zentrierhülse 25 am Mastschlitten 20 aufgefahren wird. Durch diese vorauseilende mechanische Zentrierung wird sichergestellt, dass die Riegelbolzen 62 zentriert zu den Riegelöffnungen 64 angeordnet sind, um eine exakte, spielfreie Verbindung zu gewährleisten.

In den Figuren 4 bis 6 sind das erste Hydraulikkupplungsteil 24 und das zweite Hydraulikkupplungsteil 44 näher dargestellt. Insbesondere ist zu erkennen, dass bei dem dargestellten Ausführungsbeispiel das erste Hydraulikkupplungsteil 44 mehrere Kupplungsstecker 28 aufweist, welche über nicht dargestellte innere Bohrungen mit den Hydraulikleitungen 30 leitungsmäßig verbunden sind. Korrespondierend zu den Kupplungssteckern 28 sind an dem zweiten Hydraulikkupplungsteil 44 entsprechende Kupplungsmuffen 48 angeordnet.

Gemäß der Darstellung nach Fig. 5 werden die beiden Hydraulikkupplungsteile 24, 44 auf Stoß aneinander verfahren, wobei zum Bilden der hydraulischen Verbindung die Kupplungsstecker 28 in die Kupplungsmuffen 48 fluiddicht eingesteckt werden. Die Kupplungsmuffen 48 in dem zweiten Hydraulikkupplungsteil 44 sind ebenfalls über nicht dargestellte innere Bohrungen mit seitlichen Anschlüssen 49 verbunden, über welche hydraulische Verbraucher, insbesondere ein Hydraulikantrieb, an der Werkzeugeinheit 40 mit Hydraulikfluid versorgt werden können.

In dem blockartigen Grundkörper des ersten Hydraulikkupplungsteiles 24 sind eine in Mastlängsrichtung ausgerichtete Zentrierbohrung 38 und eine dazu quergerichtete Querbohrung 34 eingebracht. In der Querbohrung 34 ist ein keilförmiges Verriegelungselement 32 verschiebbar gelagert. Das keilförmige Verriegelungselement 32 kann mittels eines Stellzylinders 33 am Mastschlitten 20 aus einer in den Figuren 4 und 5 dargestellten Rückzugsposition in eine Verriegelungsposition gemäß Fig. 6 verschoben werden.

Wie dem Ablauf aus den Figuren 4 bis 6 zu entnehmen ist, gelangt beim Zusammenfahren des ersten Hydraulikkupplungsteiles 24 und des zweiten Hydraulickupplungsteiles 44 zunächst der vorstehende Zentrierbolzen 52 in Eingriff mit der Zentrierbohrung 38. Hierdurch wird vor einem Kontakt von Kupplungssteckern 28 und Kupplungsmuffen 48 sichergestellt, dass die beiden Hydraulikkupplungsteile 24, 44 zentriert zueinander ausgerichtet sind. Durch weiteres Verfahren des Mastschlittens 20 relativ zur Werkzeugeinheit 40 wird die Anschlagsposition gemäß Fig. 5 erreicht, bei welcher die hydraulische Verbindung geschlossen ist. Anschließend wird das Verriegelungselement 32 über den Stellzylinder 33 aus der Rückzugsposition in die Verriegelungsposition verfahren. Hierdurch gelangt das Verriegelungselement 32 in Eingriff mit einer Justieröffnung 53, welche im Zentrierbolzen 52 ausgebildet ist. Aufgrund einer oberen Anlaufschräge 54 der Justieröffnung 53, welche mit einer Anlaufschräge 35 des Verriegelungselementes 32 korrespondiert, wird der Zentrierbolzen 52 und damit das zweite Hydraulikkupplungsteil 44 zusätzlich gegen das erste Hydraulikkupplungsteil 24 gespannt, wie in Fig. 6 dargestellt ist.

## Patentansprüche

1. Mastanordnung für eine Baumaschine, mit einem Mast (12), welcher
eine Mastführung (14) aufweist, entlang welcher ein Mastschlitten (20) verfahrbar gelagert ist, welcher mit einer Hydraulikquelle verbunden ist und ein erstes Hydraulikkupplungsteil (24) für ein hydraulisches Verbinden einer Werkzeugeinheit (40) mit der Hydraulikquelle an dem Mastschlitten (20) aufweist,
wobei eine Verriegelungseinrichtung (60) vorgesehen ist, welche mindestens einen hydraulisch betätigbaren Riegelbolzen (62) aufweist,
- wobei die Werkzeugeinheit (40) eine Werkzeugführungseinrichtung (46) aufweist, mit welcher die Werkzeugeinheit (40) an der Mastführung (14) anbringbar und positionierbar ist,
**dadurch gekennzeichnet,**
- **dass** an einem Rahmen (42) der Werkzeugeinheit (40) ein zweites Hydraulickupplungsteil (44) angeordnet ist, welches zu dem ersten Hydraulikkupplungsteil (24) des Mastschlittens(20) korrespondiert,
- **dass** bei einem Zusammenfahren von Mastschlitten (20) und Werkzeugeinheit (40) entlang der Mastführung (14) das erste Hydraulikkupplungsteil (24) des Mastschlittens (20) mit dem zweiten Hydraulikkupplungsteil (44) an der Werkzeugeinheit (40) hydraulisch zusammenschließbar ist, und
- ,**dass** die Verriegelungseinrichtung (60) von den Hydraulikkupplungsteilen (24, 44) beabstandet ist,
- **dass** mittels des mindestens einen hydraulisch betätigbaren Riegelbolzens (62) der Rahmen (42) der Werkzeugeinheit (40) mit dem Mastschlitten (20) mechanisch verbindbar ist und
- **dass** das erste Hydraulikkupplungsteil (24) und das zweite Hydraulikkupplungsteil (44) beabstandet zu der Mastführung (14) angeordnet sind, wobei an der Werkzeugeinheit (40) oder dem Mastschlitten (20) zwischen den Hydraulickupplungsteilen (24, 44) und der Mastführung (14) ein Aufnahmeraum (50) für die Verriegelungseinrichtung (60) gebildet ist.

2. Mastanordnung nach Anspruch 1,
**dadurch gekennzeichnet,**
**dass** das erste Hydraulikkupplungsteil (24) und das zweite Hydraulikkupplungsteil (44) mehrere Kupplungsstecker (28) beziehungsweise Kupplungsmuffen (48) aufweisen.

3. Mastanordnung nach Anspruch 2,
**dadurch gekennzeichnet,**
**dass** die Kupplungsstecker (28) und/oder die Kupplungsmuffen (48) federnd an dem Mastschlitten (20) oder der Werkzeugeinheit (40) gelagert sind.

4. Mastanordnung nach einem der Ansprüche 1 bis 3,
**dadurch gekennzeichnet,**
**dass** der mindestens eine Riegelbolzen (62) quer zu einer Längsachse (12) des Mastes gerichtet ist.

5. Mastanordnung nach einem der Ansprüche 1 bis 4,
**dadurch gekennzeichnet,**
**dass** der mindestens eine Riegelbolzen (62) durch einen zugeordneten Hydraulikzylinder angetrieben ist.

6. Mastanordnung nach einem der Ansprüche 1 bis 5,
**dadurch gekennzeichnet,**
**dass** der mindestens eine Riegelbolzen (62) an dem Mastschlitten (12) angeordnet ist und
**dass** im verbundenen Zustand von Mastschlitten (20) und Werkzeugeinheit (40) der mindestens eine Riegelbolzen (62) in dem Aufnahmeraum (50) an der Werkzeugeinheit (40) angeordnet ist.

7. Mastanordnung nach einem der Ansprüche 1 bis 6,
**dadurch gekennzeichnet,**
**dass** der Riegelbolzen (62) in eine Riegelöffnung (64) an dem Rahmen (42) der Werkzeugeinheit (40) einfahrbar ist.

8. Mastanordnung nach einem der Ansprüche 1 bis 7,
**dadurch gekennzeichnet,**
**dass** an der Werkzeugeinheit (40) und/oder dem Mastschlitten (20) mindestens ein Zentrierbolzen (52) vorgesehen ist, welcher beim Zusammenfahren von Werkzeugeinheit (40) und Mastschlitten (20) noch vor einem hydraulischen Zusammenschluss mit einer Zentrierbohrung (38) an dem gegenüberliegenden Mastschlitten (20) beziehungsweise der gegenüberliegenden Werkzeugeinheit (40) in Eingriff kommt.

9. Mastanordnung nach einem der Ansprüche 1 bis 8,
**dadurch gekennzeichnet,**
**dass** mindestens ein Hydraulikkupplungsteil (24, 44) eine verstellbare Abdeckung (36, 56) aufweist, welche bei einem Zusammenfahren der Hydraulikkupplungsteile (24, 44) von einer Abdeckposition in eine Freigabeposition verstellbar ist.

10. Mastanordnung nach einem der Ansprüche 1 bis 9,
**dadurch gekennzeichnet,**
**dass** die Werkzeugeinheit (40) einen Rüttler, einen Bohrantrieb oder einen Hydraulikhammer aufweist.

11. Baumaschine mit einem Trägergerät, an welchem eine Mastanordnung (10) mit einem im Wesentlichen vertikalen Mast (12) vorgesehen ist,
**dadurch gekennzeichnet,**
**dass** eine Mastanordnung (10) nach einem der Ansprüche 1 bis 10 vorgesehen ist.

12. Verfahren zum Verbinden einer Werkzeugeinheit (40) mit einem Mastschlitten (20) einer Mastanordnung (10), insbesondere nach einem der Ansprüche 1 bis 10, wobei
- die Werkzeugeinheit (40) eine Werkzeugführungseinrichtung (46) aufweist, mit welcher die Werkzeugeinheit (40) an einer Mastführung(14) eines Mastes (12) der Mastanordnung (10) angebracht und positioniert wird,
- der Mastschlitten (20) entlang der Mastführung (14) des Mastes (12) auf die angebrachte Werkzeugeinheit (40) zu gefahren wird,
- wobei ein erstes Hydraulikkupplungsteil (24) an dem Mastschlitten (20) mit einem korrespondierenden zweiten Hydraulikkupplungsteil (44) an der Werkzeugeinheit (40) gekuppelt wird und eine Hydraulikquelle an dem Mastschlitten (20) an der Werkzeugeinheit (40) hydraulisch angeschlossen wird,
- anschließend mindestens ein Riegelbolzen (62) einer Verriegelungseinrichtung (60) hydraulisch betätigt wird, wobei der Mastschlitten (20) beabstandet von den Hydraulikkupplungsteilen (24, 44) mit dem Rahmen (42) der Werkzeugeinheit (40) mechanisch verbunden wird und
- wobei das erste Hydraulikkupplungsteil (24) und das zweite Hydraulikkupplungsteil (44) beabstandet zu der Mastführung (14) angeordnet sind, wobei an der Werkzeugeinheit (40) oder dem Mastschlitten (20) zwischen den Hydraulikkupplungsteilen (24, 44) und der Mastführung (14) ein Aufnahmeraum (50) für die Verriegelungseinrichtung (60) gebildet ist.

## Claims

1. Mast arrangement for a construction machine, with a mast (12) having a mast guide (14), along which a mast carriage (20) is supported in a movable manner which is connected to a hydraulic source and has a first hydraulic coupling part (24) for hydraulically connecting a tool unit (40) to the hydraulic source on the mast carriage (20),
wherein a locking means (60) is provided which has at least one hydraulically operable latch bolt (62),
wherein the tool unit (40) has a tool guiding means (46), with which the tool unit (40) can be fixed and positioned on the mast guide (14),
**characterized in that**
- on a frame (42) of the tool unit (40) a second hydraulic coupling part (44) is arranged which corresponds to the first hydraulic coupling part (24) of the mast carriage (20),
- upon movement of mast carriage (20) and tool unit (40) towards each other along the mast guide (14) the first hydraulic coupling part (24) of the mast carriage (20) can be linked up hydraulically to the second hydraulic coupling part (44) on the tool unit (40) and
- **in that** the locking means (60) is spaced from the hydraulic coupling parts (24, 44), and
- by means of the at least one hydraulically operable latch bolt (62) the frame (42) of the tool unit (40) can be connected mechanically to the mast carriage (20), and
- the first hydraulic coupling part (24) and the second hydraulic coupling part (44) are arranged in a spaced manner to the mast guide (14), wherein on the tool unit (40) or the mast carriage (20) between the hydraulic coupling parts (24, 44) and the mast guide (14) a receiving space (50) for the locking means (60) is formed.

2. Mast arrangement according to claim 1,
**characterized in that**
the first hydraulic coupling part (24) and the second hydraulic coupling part (44) have several coupling plugs (28) and coupling sleeves (48) respectively.

3. Mast arrangement according to claim 2,
**characterized in that**
the coupling plugs (28) and/or the coupling sleeves (48) are supported in a spring-mounted manner on the mast carriage (20) or the tool unit (40).

4. Mast arrangement according to any one of claims 1 to 3,
**characterized in that**
the at least one latch bolt (62) is directed transversely to a longitudinal axis (12) of the mast.

5. Mast arrangement according to claim 1 to 4,
**characterized in that**
the at least one latch bolt (62) is driven by an assigned hydraulic cylinder.

6. Mast arrangement according to any one of claims 1 to 5,
**characterized in that**
the at least one latch bolt (62) is arranged on the mast carriage (20) and
**in that** in the connected state of mast carriage (20) and tool unit (40) the at least one latch bolt (62) is arranged in the receiving space (50) on the tool unit (40).

7. Mast arrangement according to any one of claims 1 to 6,
**characterized in that**
the latch bolt (62) can be moved into a latch opening (64) on the frame (42) of the tool unit (40).

8. Mast arrangement according to any one of claims 1 to 7,
**characterized in that**
on the tool unit (40) and/or the mast carriage (20) at least one centering bolt (52) is provided which, upon movement of tool unit (40) and mast carriage (20) towards each other, engages with a centering bore (38) on the opposite mast carriage (20) or the opposite tool unit (40) even before a hydraulic link-up.

9. Mast arrangement according to any one of claims 1 to 8,
**characterized in that**
at least one hydraulic coupling part (24, 44) has an adjustable cover (36, 56) which, upon movement of the hydraulic coupling parts (24, 44) towards each other, can be adjusted from a covering position to a release position.

10. Mast arrangement according to any one of claims 1 to 9,
**characterized in that**
the tool unit (40) has a vibrator, a drill drive or a hydraulic hammer.

11. Construction machine with a carrier implement, on which a mast arrangement (10) with a substantially vertical mast (12) is provided,
**characterized in that**
a mast arrangement (10) according to any one of claims 1 to 10 is provided.

12. Method for connecting a tool unit (40) to a mast carriage (20) of a mast arrangement (10), in particular according to any one of claims 1 to 10, wherein
- the tool unit (40) has a tool guiding means (46), with which the tool unit (40) is fixed and positioned on a mast guide (14) of a mast (12) of the mast arrangement (10),
- the mast carriage (20) is moved along the mast guide (14) of the mast (12) towards the fixed tool unit (40),
- wherein a first hydraulic coupling part (24) on the mast carriage (20) is coupled with a corresponding second hydraulic coupling part (44) on the tool unit (40) and a hydraulic source on the mast carriage (20) is connected hydraulically to the tool unit (40), and
- subsequently at least one latch bolt (62) of a locking means (60) is operated hydraulically, wherein the mast carriage (20), whilst being spaced from the hydraulic coupling parts (24, 44), is connected mechanically to the frame (42) of the tool unit (40),
- wherein the first hydraulic coupling part (24) and the second hydraulic coupling part (44) are arranged in a spaced manner to the mast guide (14), wherein on the tool unit (40) or the mast carriage (20) between the hydraulic coupling parts (24, 44) and the mast guide (14) a receiving space (50) for the locking means (60) is formed.

## Revendications

1. Système de mât pour un engin de chantier, avec un mât (12), qui présente un guide de mât (14), le long duquel un chariot de mât (20) est monté de manière à pouvoir être déplacé, lequel est assemblé à une source hydraulique et présente une première partie de couplage hydraulique (24) pour une liaison hydraulique d'une unité d'outil (40) à la source hydraulique sur le chariot de mât (20),
dans lequel un dispositif de verrouillage (60) est prévu, lequel présente au moins un boulon de verrouillage (62) pouvant être actionné de manière hydraulique,
- dans lequel l'unité d'outil (40) présente un dispositif de guidage d'outil (46), avec lequel l'unité d'outil (40) peut être installée et positionnée sur le guide de mât (14), **caractérisé en ce**
- **qu'**est disposée sur un bâti (42) de l'unité d'outil (40) une deuxième partie de couplage hydraulique (44), laquelle correspond à la première partie de couplage hydraulique (24) du chariot de mât (20),
- **que** lors d'un rapprochement du chariot de mât (20) et de l'unité d'outil (40) le long du guide de mât (14), la première partie de couplage hydraulique (24) du chariot de mât (20) peut être raccordée de manière hydraulique à la deuxième partie de couplage hydraulique (44) sur l'unité d'outil (40), et
- **que** le dispositif de verrouillage (60) est tenu à distance des parties de couplage hydrauliques (24, 44),
- **que** le bâti (42) de l'unité d'outil (40) peut être assemblé de manière mécanique au chariot de mât (20) au moyen de l'au moins un boulon de verrouillage (62) pouvant être actionné de manière hydraulique, et
- **que** la première partie de couplage hydraulique (24) et la deuxième partie de couplage hydraulique (44) sont disposées à distance par rapport au guide de mât (14), dans lequel un espace de réception (50) pour le dispositif de verrouillage (60) est formé sur l'unité d'outil (40) ou sur le chariot de mât (20) entre les parties de couplage hydrauliques (24, 44) et le guide de mât (14).

2. Système de mât selon la revendication 1,
**caractérisé en ce**
**que** la première partie de couplage hydraulique (24) et la deuxième partie de couplage hydraulique (44) présentent plusieurs raccords mâles de couplage (28) ou plusieurs manchons de couplage (48).

3. Système de mât selon la revendication 2,
**caractérisé en ce**
**que** les raccords mâles de couplage (28) et/ou les manchons de couplage (48) sont montés sur ressorts sur le chariot de mât (20) ou sur l'unité d'outil (40).

4. Système de mât selon l'une quelconque des revendications 1 à 3,
**caractérisé en ce**
**que** l'au moins un boulon de verrouillage (62) est dirigé de manière transversale par rapport à un axe longitudinal (12) du mât.

5. Système de mât selon l'une quelconque des revendications 1 à 4,
**caractérisé en ce**
**que** l'au moins un boulon de verrouillage (62) est entraîné par un vérin hydraulique associé.

6. Système de mât selon l'une quelconque des revendications 1 à 5,
**caractérisé en ce**
**que** l'au moins un boulon de verrouillage (62) est disposé sur le chariot de mât (12), et que dans l'état assemblé du chariot de mât (20) et de l'unité d'outil (40), l'au moins un boulon de verrouillage (62) est disposé dans l'espace de réception (50) sur l'unité d'outil (40).

7. Système de mât selon l'une quelconque des revendications 1 à 6,
**caractérisé en ce**
**que** le boulon de verrouillage (62) peut être introduit dans une ouverture de verrouillage (64) sur le bâti (42) de l'unité d'outil (40).

8. Système de mât selon l'une quelconque des revendications 1 à 7,
**caractérisé en ce**
**qu'**est prévu sur l'unité d'outil (40) et/ou sur le chariot de mât (20) au moins un boulon de centrage (52), lequel vient en prise, lors du rapprochement de l'unité d'outil (40) et du chariot de mât (20), avant un raccordement hydraulique, avec un alésage de centrage (38) sur le chariot de mât (20) opposé ou sur l'unité d'outil (40) opposée.

9. Système de mât selon l'une quelconque des revendications 1 à 8,
**caractérisé en ce**
**qu'**au moins une partie de couplage hydraulique (24, 44) présente un couvercle (36, 56) ajustable, lequel peut être ajusté depuis une position de recouvrement dans une position de dégagement lors d'un rapprochement des parties de couplage hydrauliques (24, 44).

10. Système de mât selon l'une quelconque des revendications 1 à 9,
**caractérisé en ce**
**que** l'unité d'outil (40) présente un vibreur, un organe d'entraînement pour forage ou un marteau hydraulique.

11. Engin de chantier avec un appareil de support, sur lequel est prévu un système de mât (10) avec un mât (12) sensiblement vertical,
**caractérisé en ce**
**qu'**un système de mât (10) est prévu selon l'une quelconque des revendications 1 à 10.

12. Procédé pour assembler une unité d'outil (40) à un chariot de mât (20) d'un système de mât (10), en particulier selon l'une quelconque des revendications 1 à 10, dans lequel
- l'unité d'outil (40) présente un dispositif de guidage d'outil (46), avec lequel l'unité d'outil (40) est installée et positionnée sur un guide de mât (14) d'un mât (12) du système de mât (10),
- le chariot de mât (20) est déplacé en direction de l'unité d'outil (40) installée le long du guide de mât (14) du mât (12),
- dans lequel une première partie de couplage hydraulique (24) est couplée sur le chariot de mât (20) à une deuxième partie de couplage hydraulique (44) correspondante sur l'unité d'outil (40) et une source hydraulique est reliée de manière hydraulique au chariot de mât (20) sur l'unité d'outil (40),
- puis au moins un boulon de verrouillage (62) d'un dispositif de verrouillage (60) est actionné de manière hydraulique, dans lequel le chariot de mât (20) est assemblé de manière mécanique à distance des parties de couplage hydrauliques (24, 44) au bâti (42) de l'unité d'outil (40), et
- dans lequel la première partie de couplage hydraulique (24) et la deuxième partie de couplage hydraulique (44) sont disposées à distance du guide de mât (14), dans lequel un espace de réception (50) pour le dispositif de verrouillage (60) est formé sur l'unité d'outil (40) ou le chariot de mât (20) entre les parties de couplage hydrauliques (24, 44) et le guide de mât (14).
